Europäisches Patentamt

European Patent Office

Office européen des brevets

(19)

(11) Veröffentlichungsnummer: **0 059 825**
**B1**

(12) # EUROPÄISCHE PATENTSCHRIFT

(45) Veröffentlichungstag der Patentschrift:
19.06.85

(51) Int. Cl.⁴: **F 16 B 13/06**

(21) Anmeldenummer: **82100239.1**

(22) Anmeldetag: **14.01.82**

(54) Befestigungselement aus Metall.

(30) Priorität: 05.03.81 DE 3108388

(43) Veröffentlichungstag der Anmeldung:
15.09.82 Patentblatt 82/37

(45) Bekanntmachung des Hinweises auf die Patenterteilung:
19.06.85 Patentblatt 85/25

(84) Benannte Vertragsstaaten:
AT BE CH FR GB IT LI NL SE

(56) Entgegenhaltungen:
AT - B - 310 403
DE - A - 2 922 126
FR - A - 476 982

Industrial Fasteners Handbook, 2nd Edition, Trade &
Technical Press Ltd., S. 180 u. 183

(73) Patentinhaber: artur fischer forschung,
Weinhalde 14 - 18, D-7244 Waldachtal 3 (Tumlingen) (DE)

(72) Erfinder: Fischer, Artur, Dr. h.c., Weinhalde 34,
D-7244 Waldachtal 3/Tumlingen (DE)

BUNDESDRUCKEREI BERLIN

## Beschreibung

Die Erfindung betrifft ein Befestigungselement aus Metall, bestehend aus einem Stehbolzen, der einen Abschnitt mit Außengewinde zum Aufdrehen einer Mutter sowie an seinem vorderen Ende einen Spreizkonus aufweist, und einer über den Stehbolzen gestülpten Hülse, die von ihrem Einführende ausgehend über einen Teil ihrer Länge geschlitzt ist.

Ein solches Befestigungselement ist beispielsweise im Industrial Fasteners Handbook, 2nd Edition, Trade & Technical Press Ltd., auf S. 183 beschrieben. Dieses Befestigungselement weist einen durchgehend gleichen, dem Bohrlochdurchmesser entsprechenden Außendurchmesser auf. Bei der Verankerung solcher aus Metall bestehender Befestigungselemente in Beton ist eine bestimmte Einbautiefe erforderlich, um eine Sprengung des Betons beim Anziehen des Befestigungselementes zu vermeiden. Durch die Einbautiefe wird die Länge des Bohrloches und die Länge des Befestigungselementes bestimmt. In Beton, insbesondere in armiertem Beton, ist es beispielsweise durch Kieselsteine oder Armierungsstäbe nicht zu verhindern, daß das Bohrloch unrund wird oder Abknickungen und Verengungen aufweist. Das Einsetzen eines zylindrischen, längeren Befestigungselementes in ein solches Bohrloch kann zu erheblichen Problemen führen ggf. sogar unmöglich sein. Beim Versuch, das Befestigungselement mit Hammer in das Bohrloch einzuschlagen, kann das Element derart beschädigt werden, daß es nicht mehr bzw. nicht vollständig aufspreizbar ist. Dies führt dann zu Fehlmontagen, die erhebliche Schäden verursachen können.

Dieses Problem tritt auch bei Befestigungselementen aus Metall auf, die aus einem Bolzen bestehen, der einen in den zu befestigenden Gegenstand eingreifenden Abschnitt mit Außengewinde zum Aufdrehen einer Mutter und an seinem vorderen Ende einen im Durchmesser abgesetzten Abschnitt mit einem sich daran anschließenden Spreizkonus aufweist, wobei auf diesen abgesetzten Abschnitt eine sich im Bohrloch verklemmende Spreizhülse angeordnet ist. Ein solches Befestigungselement ist beispielsweise im Industrial Fasteners Handbook, 2nd Edition, Trade & Technical Press Ltd., auf S. 180 beschrieben.

Der Erfindung liegt die Aufgabe zugrunde, Befestigungselemente der oben beschriebenen Art derart zu verbessern, daß ein leichteres Einführen in das Bohrloch ermöglicht wird.

Die erfindungsgemäßen Gestaltungsmöglichkeiten ergeben sich jeweils aus dem kennzeichnenden Teil der Ansprüche 1 und 2.

Durch diese Gestaltung ist lediglich der kurze Spreizteil durch die Verengungen bzw. Abknickungen des Bohrloches zu führen. Aufgrund der Reduzierung des Außendurchmessers des Befestigungselementes kann das Befestigungselement im Bereich der Bohrlochmündung verschwenkt werden, so daß der günstigste Weg für das Einführen des Befestigungselementes ausgenutzt werden kann. Erst im letzten Stadium des Einführens des Befestigungselementes kommt das Befestigungselement im Bereich der Bohrlochmündung wieder zur Anlage. Da das gesamte Mittelstück des Befestigungselementes im Bohrloch frei liegt, ist dieses letzte Teilstück des Einführweges relativ leicht, zumindest jedoch ohne Beschädigung des Befestigungselementes zu überwinden. Das Befestigungselement bleibt somit funktionsfähig. Da der Spreizteil im Durchmesser nicht verändert ist, werden trotz der Reduzierung des Außendurchmessers des Befestigungselementes im Mittelbereich die gleichen Haltewerte wie bei der ordnungsgemäßen Verankerung der herkömmlichen Befestigungselemente erreicht.

In der Zeichnung sind Ausführungsbeispiele der Erfindung dargestellt. Es zeigt

Fig. 1 ein in armiertem Beton eingesetztes Befestigungselement,

Fig. 2 ein Befestigungselement, bestehend aus einem Bolzen mit einem abgesetzten, einen Spreizkonus aufweisenden Abschnitt, auf der eine Spreizhülse angeordnet ist.

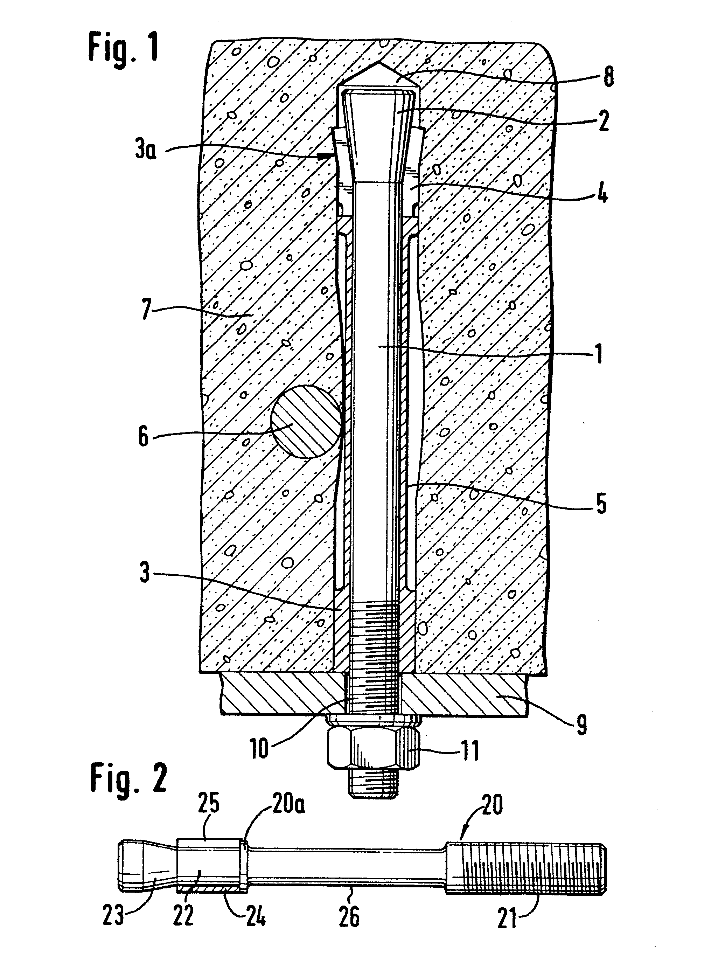

Das Befestigungselement nach Fig. 1 besteht aus einem Stehbolzen 1, der an seinem vorderen Ende einen Spreizkonus 2 aufweist. Über den Stehbolzen 1 ist eine Hülse 3 gestülpt, die von ihren Einführende ausgehend über einen Teil 3a ihrer Länge schlitzt ist. Nach den Längsschlitzen 4 ist der Hülsendurchmesser in Richtung der dem Einführende entgegengesetzten Stirnseite der Hülse über einen Teil ihrer Länge reduziert. Aufgrund der Durchmesserreduzierung 5 der Hülse 3 ist das Befestigungselement relativ leicht über die durch das Armierungseisen 6 in dem Betonteil 7 sich ergebende Abknickung des Bohrloches 8 schiebbar, da über den größten Teil des Einschiebweges nur eine Bohrlochanlage des Befestigungselementes im Bereich des geschlitzten Teils der Hülse 3 erfolgt. Erst im letzten Teil des Einschiebweges ergibt sich eine weitere Anlage des Befestigungselementes im Bereich der Bohrlochmündung, da hier die Hülse 3 wieder den Außendurchmesser des geschlitzten Teils 3a der Hülse aufweist. Zur Befestigung eines Gegenstandes 9 wird nach dem Einsetzen des Befestigungselementes in das Bohrloch 8 auf das die Oberfläche des Betonteiles 7 überragende Außengewinde 10 des Stehbolzens 1 der zu befestigende Gegenstand 9 aufgesetzt und mit einer Mutter 11 an das Betonteil 7 verspannt. Ohne den Erfindungsgedanken zu verlassen, ist es auch möglich, die im Durchmesser unterschiedlichen Abschnitte der Hülse durch entsprechende Rohrstücke zusammen zu setzen.

Das Befestigungselement nach Fig. 2 besteht aus einem Bolzen 20, dessen in den zu befestigenden Gegenstand eingreifender Abschnitt mit einem Außengewinde 21 versehen ist. Im Bereich des Einführendes des Befestigungselementes weist der Bolzen 20 einen abgesetzten Abschnitt 22 auf, an den sich ein Spreizkonus 23 anschließt. Auf diesem abgesetzten Abschnitt 22 ist die Spreizhülse 24 angeordnet, die zur Verklemmung im Bohrloch eine Längsrippe 25 aufweist. Nach einem dem Außendurchmesser der Spreizhülse 24 entsprechenden Bund 20a des Bolzens 20 ist der Außendurchmesser des Bolzens in Richtung der dem Einführende entgegengesetzten Stirnseite des Bolzens über einen Teil seiner Länge reduziert. Die Länge der Durchmesserreduzierung 26 ist so gewählt, daß nach dem vollständigen Einsetzen des Befestigungselementes in ein Bohrloch die Durchmesserreduzierung 26 vor der Bohrlochmündung endet. Damit kommt der Bolzen 20 auch im Bereich der Bohrlochmündung zur Anlage.

## Patentansprüche

1. Befestigungselement aus Metall, bestehend aus einem Stehbolzen (1), der einen Abschnitt mit Außengewinde (10) zum Aufdrehen einer Mutter (11) sowie an seinem vorderen Ende einen Spreizkonus (2) aufweist und einer über den Stehbolzen (1) gestülpten Hülse (3), die von ihrem Einführende ausgehend über einen Teil (3a) ihrer Länge geschlitzt ist, dadurch gekennzeichnet, daß nach dem geschlitzten Teil (3a) der Hülse der Außendurchmesser der Hülse (3) in Richtung der dem Einführende entgegengesetzten Stirnseite der Hülse über einen Teil ihrer Länge reduziert ist.

2. Befestigungselement aus Metall, bestehend aus einem Bolzen (20), der einen in den zu befestigenden Gegenstand (9) eingreifenden Abschnitt mit Außengewinde (21) zum Aufdrehen einer Mutter und an seinem vorderen Ende einen im Durchmesser abgesetzten Abschnitt (22) mit einem sich daran anschließenden Spreizkonus (23) aufweist, wobei auf diesen abgesetzten Abschnitt eine sich im Bohrloch verklemmende Spreizhülse (24) angeordnet ist, dadurch gekennzeichnet, daß nach der Spreizhülse (24) und einem dem Außendurchmesser der Spreizhülse entsprechenden Bund (20a) des Bolzens (20) der Außendurchmesser des Bolzens in Richtung der dem Einführende entgegengesetzten Stirnseite des Bolzens über einen Teil seiner Länge reduziert ist.

## Claims

1. Metal fastening element comprising a stay bolt (1) having a portion with an external thread (10) onto which a nut (11) can be screwed, and having an expansion cone (2) at its front end, and a sleeve (3) placed over the stay bolt (1), which sleeve is slotted from its lead-in end over part (3a) of its length, characterised in that after the slotted part (3a) of the sleeve the external diameter of the sleeve (3) is reduced over part of its length in a direction towards that end of the sleeve that is opposite the lead-in end.

2. Metal fastening element comprising a bolt (20) having a portion with an external thread (21), onto which a nut can be screwed, which portion engages in the object (9) to be fastened, and having at its front end a portion (22) of reduced diameter and an expansion cone (23) adjoining that portion, an expansible sleeve (24), which wedges in the drilled hole, being located on this reduced portion, characterised in that after the expansible sleeve (24) and a collar (20a) on the bolt (20), which collar corresponds to the external diameter of the expansible sleeve, the external diameter of the bolt is reduced over part of its length in a direction towards that end of the bolt that is opposite the lead-in end.

## Revendications

1. Elément de fixation en métal, se composant d'un goujon fileté (1) qui présente un tronçon à filetage externe (10) pour le vissage d'un écrou (11) et comporte un cône d'écartement (2) à son extrémité antérieure, ainsi que d'une douille (3) qui est enfilée sur ledit goujon fileté (1) et est fendue sur une partie (3a) de sa longueur depuis son extrémité d'introduction, élément caractérisé par le fait que, après la partie fendue (3a) de la douille, le diamètre externe de cette douille (3) est réduit sur une partie de sa longueur, en direction de la face frontale de ladite douille située à l'opposé de son extrémité d'introduction.

2. Elément de fixation en métal, consistant en un goujon (20) qui présente un tronçon à filetage externe (21) permettant le vissage d'un écrou et s'engageant dans l'objet (9) devant être fixé, et qui comporte à son extrémité antérieure un tronçon (22) de diamètre en décrochement auquel se raccorde un cône d'écartement (23), tronçon en décrochement sur lequel se trouve une douille d'écartement (24) se coinçant dans le trou foré, élément caractérisé par le fait que, après la douille d'écartement (24) et un collet (20a) du goujon (20) correspondant au diamètre externe de ladite douille d'écartement, le diamètre externe dudit goujon est réduit sur une partie de sa longueur, en direction de la face extrême dudit goujon située à l'opposé de son extrémité d'introduction.

**Fig. 1**

3a

8

2

4

7

1

6

5

3

10

9

11

**Fig. 2**

25    20a    20

23   22   24    26    21